# EUROPÄISCHE PATENTSCHRIFT

(11) **EP 3 401 577 B1**
(45) Veröffentlichungstag und Bekanntmachung des Hinweises auf die Patenterteilung: **30.06.2021**
(21) Anmeldenummer: 18169138.7
(22) Anmeldetag: 25.04.2018
(51) Int. Cl.: F16J 15/08, F16K 1/226, F16K 5/04, F16K 5/06

(54) **DICHTEINHEIT MIT EINER TELLERFEDER UND VENTILANORDNUNG MIT EINER SOLCHEN DICHTEINHEIT**
SEALING UNIT WITH A SPRING WASHER AND VALVE ASSEMBLY WITH SUCH A SEALING ELEMENT
UNITÉ D'ÉTANCHÉITÉ DOTÉE D'UNE RONDELLE À RESSORT ET DISPOSITIF DE SOUPAPE DOTÉ D'UNE TELLE UNITÉ D'ÉTANCHÉITÉ

(30) Priorität: 10.05.2017 DE 102017207903
(43) Veröffentlichungstag der Anmeldung: 14.11.2018
(73) Patentinhaber: VOLKSWAGEN AKTIENGESELLSCHAFT, 38440 Wolfsburg (DE)
(72) Erfinder: Fries, Holger, 38640 Goslar (DE); Lüders, Ralf, 31224 Peine (DE); Bilbal, Ugur Goekhan, 31139 Hildesheim (DE)

(56) Entgegenhaltungen:
- WO-A1-2008/036576
- WO-A2-2007/078426
- DE-A1- 4 120 830
- GB-A- 978 601
- US-A- 3 394 915
- US-B2- 9 383 020

## Beschreibung

Die Erfindung betrifft eine Dichteinheit zum Abdichten eines Übergangs zwischen einem Ventilglied und einem Ende eines Fluidkanals. Weiter betrifft die Erfindung eine Ventilanordnung mit einer solchen Dichteinheit.

Herkömmliche Brennkraftmaschinen weisen regelmäßig einen oder mehrere Kühlmittelkreisläufe zur Kühlung auf, wobei das Kühlmittel bspw. durch einen ersten Kühlmittelweg mit einem Wärmetauscher oder durch einen zweiten Kühlmittelweg ohne Wärmetauscher geleitet werden kann. Zur Regelung der durch die verschiedenen Kühlmittelwege zu leitenden Kühlmittelmengen sind regelmäßig Ventilanordnungen, wie etwa Drehschieberventile, vorgesehen. Ventilanordnungen weisen ein verstellbares Ventilglied, wie etwa einen Drehschieber, auf, das in einer ersten Ventilstellung einen Durchgang zwischen einem Fluidzuführkanal und einem ersten Fluidableitkanal freigibt und in einer zweiten Ventilstellung einen Durchgang zwischen dem Fluidzuführkanal und einem zweiten Fluidableitkanal freigibt. Auch Zwischenstellungen des Ventilglieds sind möglich, bspw. um eine optimale Kühlmitteltemperatur einstellen zu können.

In den jeweiligen Ventilstellungen muss dafür gesorgt werden, dass das dem Ventilglied zugewandte Ende eines entsprechenden Fluidkanals dichtend an dem Ventilglied anliegt, so dass ein Vordringen des Kühlmittels zu nicht dafür vorgesehenen Bereichen der Ventilanordnung, wie etwa Bereichen mit elektrischen Bauteilen, verhindert wird. Damit kann eine Beschädigung der elektrischen Bauteile verhindert werden. Ferner soll in einer geschlossenen Ventilstellung kein Kühlmittel von dem Fluidkanal an dem Ventilglied vorbei weiter in die Ventilanordnung vordringen können. Zu diesem Zweck ist regelmäßig eine zwischen dem beweglichen Ventilglied und dem Ende des Fluidkanals wirkende Dichteinheit vorgesehen.

In der DE 10 2015 216 498 A1 wird eine Dichteinheit gezeigt, welche zur Abdichtung eines Übergangs zwischen einem Ende eines Fluidkanals und einem Ventilglied geeignet ist. Dazu weist die Dichteinheit zwei einander zumindest abschnittsweise überlappende und relativ zueinander in Axialrichtung beweglich angeordnete Dichthülsenteile auf, die zwischen sich einen in Axialrichtung verlaufenden Dichtspalt aufweisen. Der Dichtspalt wird durch die dichtende Anlage einer zylindrischen Innenfläche des einen Dichthülsenteils an einer zylindrischen Außenfläche des anderen Dichthülsenteils gebildet. Die beiden Dichthülsenteile werden mittels einer Wellringfeder in Axialrichtung auseinandergedrängt, um gegenüber dem Ende des Fluidkanals bzw. des Ventilglieds abzudichten. Insgesamt ergibt sich ein relativ komplexer und damit teurer Aufbau für die Dichteinheit.

Die GB 978 601 A offenbart eine Dichteinheit mit einem Dichtring zum Abdichten gegenüber einem Ventilglied und einer Feder zum Abdichten gegenüber einem Fluidkanal. Dabei sind der Dichtring und die Feder dichtend miteinander verbunden.

Die US 9 383 020 B2 beschreibt eine Hochtemperaturdichtung. Die Hochtemperaturdichtung weist einen Abschlusskörper, einen Ventilkörper, ein Federelement und einen Dichtungshalter auf. Das Federelement wird von dem Ventilkörper und dem Dichtungshalter gehalten. Weiter ist das Federelement geeignet, um gegen den Abschlusskörper abzudichten.

Der Erfindung liegt die Aufgabe zugrunde, eine Dichteinheit bereitzustellen, welche eine geringe Komplexität und gleichzeitig eine gute Dichtwirkung aufweist. Weiter ist es eine Aufgabe eine Ventilanordnung mit einer solchen Dichteinheit bereitzustellen.

Diese Aufgabe wird erfindungsgemäß durch eine Dichteinheit mit den in Anspruch 1 angegebenen Merkmalen gelöst. Vorteilhafte Ausgestaltungen der Erfindung bzw. eine Ventilanordnung mit einer solchen Dichteinheit sind in den weiteren Ansprüchen beschrieben.

Dementsprechend wird eine Dichteinheit zum Abdichten eines Übergangs zwischen einem Ventilglied und einem Ende eines Fluidkanals bereitgestellt. Die Dichteinheit weist einen Dichtring zum Abdichten gegenüber dem Ventilglied, und eine Tellerfeder zum Abdichten gegenüber dem Ende des Fluidkanals auf. Dabei sind der Dichtring und die Tellerfeder dichtend miteinander verbunden. Weiter weist die Dichteinheit zumindest einen O-Ring zum Beeinflussen der Federwirkung der Tellerfeder auf. Dabei ist der O-Ring als Elastomerelement ausgebildet.

Dadurch, dass die Dichteinheit nur wenige Komponenten aufweist, ist sie in der Ausführung vergleichsweise wenig komplex. Insbesondere kann die Dichteinheit lediglich aus dem Dichtring, der Tellerfeder und dem O-Ring bestehen. Somit ist auch die Herstellung bzw. Montage der Dichteinheit einfach zu realisieren und damit billig. Weiter ist bei der erfindungsgemäßen Dichteinheit die Anforderung an die Formtreue der einzelnen Komponenten geringer als bei der zuvor beschriebenen herkömmlichen Dichteinheit.

Die Dichteinheit weist eine Tellerfeder auf. Dabei ist unter der Tellerfeder insbesondere einer Feder zu verstehen, welche eine biegeweiche Platte aufweist. Weiter ist die biegeweiche Platte entsprechend der gewünschten Form der Tellerfeder gebogen.

Der äußere Bereich der Tellerfeder dient zum Abdichten gegenüber dem Ende des Fluidkanals. Der innere Bereich der Tellerfeder ist dagegen mit dem Dichtring dichtend verbunden. Dabei bedeutet dichtend verbunden, dass kein Fluid, insbesondere keine Flüssigkeit, zwischen der Tellerfeder und dem Dichtring hindurchdringen kann. Eine Leckage zwischen Tellerfeder und Dichtring ist somit unterbunden.

Die Tellerfeder kann ein Metall, einen Edelstahl und/oder einen Kunststoff aufweisen. Der Dichtring wird über die Tellerfeder dichtend an das Ventilglied angepresst.

Der Einsatz einer metallischen Tellerfeder gewährleistet gleichbleibende Federeigenschaften über die gesamte Lebenszeit der Dichteinheit. Insbesondere bleibt die Anpresswirkung, welche die Tellerfeder verursacht, und damit auch die durch die Anpresswirkung verursachte Dichtwirkung, mit der Zeit konstant. Temperaturschwankungen oder das verwendete Fluid beeinflussen die Federwirkung der Tellerfeder nicht.

Der Dichtring weist einen Kunststoff auf. Insbesondere handelt es sich bei dem Kunststoff um Polyvinylidenfluorid (PVDF) oder Polytetrafluorethylen (PTFE). Der Dichtring dient zum Abdichten gegenüber dem Ventilglied.

Das Ventilglied ist ein Regelelement zur Regelung eines Fluidkreislaufs. Durch Drehen des Ventilglieds lässt sich der Fluss eines Fluidstroms zu oder von einem Fluidkanal steuern. Weiter kann das Ende des Fluidkanals in einem Gehäuse ausgebildet sein.

Gemäß einer Ausführungsform der Dichteinheit ist die Dichteinheit rotationssymmetrisch um eine Mittelachse ausgebildet. Insbesondere ist der Dichtring kreiszylinderförmig ausgebildet. Damit ergibt sich ein kreisförmiger Kontaktbereich des Dichtrings, welcher passend einen kugelförmigen Bereich des Ventilglieds abdichten kann. Weiter kann die rotationssymmetrisch ausgebildete Tellerfeder passend das Ende eines zylinderförmigen Fluidkanals abdichten.

Die Tellerfeder weist einen inneren Endbereich auf. Dabei ist die Tellerfeder an dem inneren Endbereich stoffschlüssig, kraftschlüssig und/oder formschlüssig mit dem Dichtring verbunden. Auf jeden Fall sind die Tellerfeder und der Dichtring dichtend miteinander verbunden, so dass kein Fluid, insbesondere keine Flüssigkeit, zwischen der Tellerfeder und dem Dichtring hindurchströmen kann.

Wenn die Tellerfeder und der Dichtring stoffschlüssig miteinander verbunden sind, dann sind die Tellerfeder und der Dichtring durch eine Verspritzung miteinander fest verbunden. Der Dichtring kann so hergestellt werden, dass er innig mit der Tellerfeder verbunden ist.

Wenn die Tellerfeder und der Dichtring formschlüssig miteinander verbunden sind, dann sind die Tellerfeder und der Dichtring so ausgebildet, dass sie ineinander eingreifen, um eine dichtende Verbindung zu realisieren.

Wenn die Tellerfeder und der Dichtring kraftschlüssig miteinander verbunden sind, dann ist der Durchmesser einer Öffnung, welche durch den inneren Bereich der Tellerfeder gebildet wird, so bemessen, dass die Tellerfeder am gesamten inneren Bereich fest an eine Außenfläche des Dichtrings angepresst ist. Insbesondere ist dann der Durchmesser der Öffnung, welche durch den inneren Bereich der Tellerfeder gebildet wird, gleich groß oder geringfügig kleiner als der Durchmesser des Dichtrings. Dadurch entsteht eine dichtende Verbindung zwischen Tellerfeder und Dichtring.

Die Tellerfeder weist einen äußeren Endbereich auf, wobei der äußere Endbereich von dem Dichtring weggerichtet ist. Dadurch kann die Tellerfeder insgesamt eher flach ausgebildet sein und damit einfach herzustellen sein.

Prinzipiell kann eine nicht erfindungsgemäße Tellerfeder umgebogen sein und einen äußeren Endbereich aufweisen, wobei der äußere Endbereich auf den Dichtring gerichtet ist. In diesem Fall kann eine Abdichtung gegen das Ende des Fluidkanals mittels eines Bereichs der Tellerfeder, welcher umgebogen ist, erfolgen. Aufgrund der umgebogenen Tellerfeder ergibt sich ein langer Hebelarm, welcher zu einer geringen Federsteifigkeit führt.

In einer Weiterbildung der Erfindung ist es auch möglich, dass die Tellerfeder umlaufende ringförmige Wellen oder umlaufende spiralförmige Wellen aufweist. Über diese umlaufenden ringförmigen oder spiralförmigen Wellen der Tellerfeder und mittels der Dicke der Tellerfeder kann die gewünschte Biegesteifigkeit der Tellerfeder eingestellt werden. Über die Biegesteifigkeit bestimmt sich dann auch die Zustellkraft, mit welcher die Tellerfeder gegen das Ende des Fluidkanals drückt und/oder mit welcher die Tellerfeder den Dichtring gegen das Ventilglied drückt.

Insbesondere ist die Tellerfeder sehr dünn ausgebildet. In diesem Fall weist die Tellerfeder eine Dicke von wenigen zehntel Millimetern auf. Die Dicke der Tellerfeder kann im Bereich von 0,01 mm bis 2 mm, bevorzugt im Bereich von 0,05 mm bis 1 mm und noch bevorzugter im Bereich von 0,1 mm bis 0,5 mm liegen.

Die Dichteinheit weist zumindest einen O-Ring zum Beeinflussen der Federwirkung der Tellerfeder auf. Bei dem O-Ring handelt es sich um ein Elastomerelement. Der O-Ring ist insbesondere im Federweg der Tellerfeder positioniert, um die Federwirkung der Tellerfeder zu beeinflussen und/oder den Federweg der Tellerfeder zu begrenzen.

Es liegt schließlich im Rahmen der Erfindung, dass die Tellerfeder eine elastische Umfassung zum Verbessern der Dichtwirkung gegenüber dem Ende des Fluidkanals aufweist. Mittels der elastischen Umfassung kann eine Leckage zwischen der Tellerfeder und dem Ende des Fluidkanals bestmöglich verhindert werden. Insbesondere kann die elastische Umfassung ein Dichtlack sein.

Weiter wird eine Ventilanordnung, welche insbesondere ein Regelventil zur Regelung eines Kühlmittelkreislaufs ist, mit einer Dichteinheit, wie beschrieben, einem Ende eines Fluidkanals und einem Ventilglied bereitgestellt.

Die Tellerfeder liegt an einem Außenbereich des Endes des Fluidkanals auf. Weiter kann die Tellerfeder innerhalb des Endes des Fluidkanals eingeklemmt sein.

Wenn die Tellerfeder nur an dem Außenbereich des Endes des Fluidkanals aufliegt, dann braucht das Ende des Fluidkanals nicht speziell ausgebildet zu sein, da es auf die Form des Endes des Fluidkanals nicht ankommt. Die Tellerfeder liegt mehr oder weniger flach mit ihrem äußeren Endbereich an dem Außenbereich des Endes des Fluidkanals auf. Dabei wird das Ende des Fluidkanals von einem Bereich eines Gehäuses gebildet.

Wenn die Tellerfeder innerhalb des Endes des Fluidkanals eingeklemmt ist, dann dichtet die Tellerfeder die Dichteinheit gegenüber einer Wand des Fluidkanals ab. Vorteilhafterweise ist dann die Anpresskraft, welche von der Tellerfeder auf die Wand des Fluidkanals ausgeübt wird, nicht mit der Kraft korreliert, welche der Dichtring auf das Ventilglied ausübt. Die Anpresskraft, welche für die Dichtheit zwischen der Tellerfeder und der Wand des Endes des Fluidkanals sorgt, kann demnach in diesem Fall beliebig groß gewählt werden.

Alternativ kann das Ende des Fluidkanals eine Ausnehmung aufweisen. Die Tellerfeder übt dann einen Druck gegen die Wand der Ausnehmung aus und dichtet dadurch gegen die Wand der Ausnehmung ab. Dabei wird das Ende des Fluidkanals mit der Ausnehmung von einem Bereich eines Gehäuses gebildet.

Die für die vorgeschlagene Dichteinheit beschriebenen Ausführungsformen und Merkmale gelten für die vorgeschlagene Ventilanordnung entsprechend und umgekehrt.

Weitere mögliche Implementierungen der Erfindung umfassen auch nicht explizit genannte Kombinationen von zuvor oder im Folgenden beschriebenen Merkmalen. Dabei wird der Fachmann auch Einzelaspekte als Verbesserungen oder Ergänzungen zu der jeweiligen Grundform der Erfindung hinzufügen.

Die Erfindung wird im Folgenden anhand der Zeichnungen näher erläutert. Diese zeigen in
Fig. 1 eine schematische und teilweise perspektivische Ansicht einer Ventilanordnung mit einer Dichteinheit gemäß einer Ausführungsform der Erfindung,
Fig. 2 eine Draufsicht auf die Dichteinheit aus Fig. 1,
Fig. 3 eine schematische und teilweise perspektivische Ansicht einer nicht erfindungsgemäßen Ventilanordnung mit einer Dichteinheit, und
Fig. 4 eine schematische und teilweise perspektivische Ansicht einer Ventilanordnung mit einer Dichteinheit gemäß einer weiteren Ausführungsform der Erfindung.

In den Figuren sind gleiche oder funktionsgleiche Elemente mit denselben Bezugszeichen versehen worden. Ferner sollte beachtet werden, dass die Darstellungen in den Figuren nicht notwendigerweise maßstabsgerecht sind.

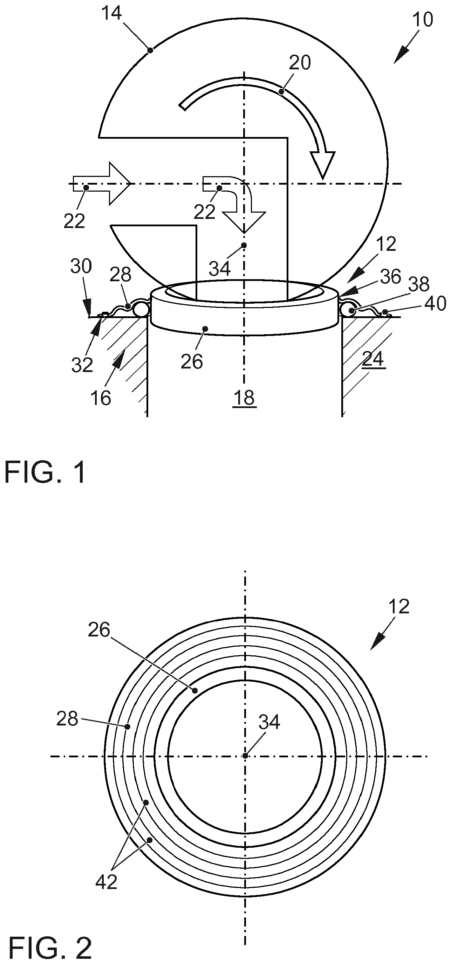

Fig. 1 zeigt eine schematische und teilweise perspektivische Ansicht einer Ventilanordnung 10 mit einer Dichteinheit 12 gemäß einer Ausführungsform der Erfindung. Die Ventilanordnung 10 weist weiter ein Ventilglied 14 und ein Ende 16 eines Fluidkanals 18 auf. Das Ventilglied 14 ist in Richtung des Pfeils 20 drehbar, um den Strom eines Kühlmittels zu steuern. Dabei fließt das Kühlmittel in Richtung der Pfeile 22. Die Dichteinheit 12 dient zur Abdichtung des Übergangs zwischen dem Ventilglied 14 und dem Ende 16 des Fluidkanals 18. Das Ende 16 des Fluidkanals 18 ist in einem Bereich eines Gehäuses 24 ausgebildet.

Die Dichteinheit 12 weist einen Dichtring 26 und eine Tellerfeder 28 auf. Der Dichtring 26 dichtet die Dichteinheit 12 gegenüber dem Ventilglied 14 ab. Dagegen dichtet die Tellerfeder 28 die Dichteinheit 12 gegenüber dem Ende 16 des Fluidkanals 18 ab. Dabei sind der Dichtring 26 und die Tellerfeder 28 dichtend miteinander verbunden, so dass es zwischen Dichtring 26 und Tellerfeder 28 zu keiner Leckage von Kühlmittel kommt.

Wie Fig. 1 zeigt, liegt ein äußerer Endbereich 32 der Tellerfeder 28 an einem Außenbereich 30 des Endes 16 des Fluidkanals 18 auf. Dabei dichtet der äußere Endbereich 32 die Dichteinheit 12 gegenüber dem Außenbereich 30 ab. Weiter ist der äußere Endbereich 32 von dem Dichtring 26 weggerichtet.

Die Dichteinheit 12 ist rotationssymmetrisch um eine Mittelachse 34 ausgebildet. Wie in Fig. 1 zu sehen ist, weist der Dichtring 26 eine kreiszylinderförmige Form auf. Dementsprechend ergibt sich eine kreisförmige Kontaktfläche zum Ventilglied 14 hin, welche geeignet ist, um den Dichtring 26 gegen eine kugelförmige Form des Ventilglieds 14 abzudichten. Die Tellerfeder 28 ist demnach ebenfalls rotationssymmetrisch ausgebildet.

Die Tellerfeder 28 weist einen inneren Endbereich 36 auf. Dabei ist die Tellerfeder 28 an dem inneren Endbereich 36 stoffschlüssig mit dem Dichtring 26 verbunden. Genauer ist der innere Endbereich 36 der Tellerfeder 28 durch eine Umspritzung innig mit dem Dichtring 26 verbunden. Eine Leckage zwischen Tellerfeder 28 und Dichtring 26 ist somit unterbunden. Die Herstellung der Dichteinheit 12 gelingt dadurch ohne Montageaufwand. Dadurch lassen sich Fehler bei der Herstellung der Dichteinheit 12 vermeiden. Weiter kann eine Einsparung von Kosten erreicht werden.

Alternativ kann der innere Endbereich 36 der Tellerfeder 28 formschlüssig mit dem Dichtring 26 verbunden sein. Dazu greift die Tellerfeder 28 in eine Ausnehmung des Dichtrings 26 ein. Die Tellerfeder 28 ist dann spaltfrei an dem Dichtring 26 montiert.

In einer weiteren Alternative kann der innere Endbereich 36 der Tellerfeder 28 kraftschlüssig mit dem Dichtring 26 verbunden sein. Dazu wird die Öffnung der Tellerfeder 28, welche durch den inneren Endbereich 36 begrenzt wird, so bemessen, dass der innere Endbereich 36 an den Dichtring 26 gedrückt wird. Auch in diesem Fall ist die Tellerfeder 28 spaltfrei an dem Dichtring 26 montiert.

Weiter weist die Dichteinheit 12 einen O-Ring 38 auf. Der O-Ring 38 ist als Elastomerelement ausgebildet. Der O-Ring 38 dient zum Einstellen bzw. Begrenzen der Federwirkung der Tellerfeder 28. Dazu ist der O-Ring 38 im Federweg der Tellerfeder 28 positioniert. Alternativ können auch mehrere O-Ringe 38 vorgesehen sein.

Es ist weiter möglich, dass die Tellerfeder 28 eine elastische Umfassung 40 aufweist. Die elastische Umfassung 40 dient zum Verbessern der Dichtwirkung der Tellerfeder 28 gegenüber dem Ende 16 des Fluidkanals 18. Wie in Fig. 1 dargestellt, ist die elastische Umfassung 40 an der Unterseite der Tellerfeder 28, welche in Richtung des Fluidkanals 18 weist, angeordnet. Die elastische Umfassung 40 ist dann aufgrund der Federwirkung der Tellerfeder 28 gegen den Außenbereich 30 des Endes 16 des Fluidkanals 18 gepresst. Dadurch kann ein Unterwandern der Tellerfeder 28 mit Kühlmittel verhindert werden.

Fig. 2 zeigt eine Draufsicht auf die Dichteinheit 12 aus Fig. 1. Der Dichtring 26 besteht aus Kunststoff. Dabei kann es sich insbesondere um die Kunststoffe Polyvinylidenfluorid (PVDF) oder Polytetrafluorethylen (PTFE) handeln. Die Tellerfeder 28 weist dagegen ein Metall oder Edelstahl auf. Alternativ kann die Tellerfeder 28 auch aus Kunststoff bestehen.

Die Tellerfeder 28 ist mit einer Dicke von wenigen zehntel Millimetern sehr dünn ausgeführt. Dabei ist die Tellerfeder 28 als biegeweiche Platte ausgebildet. Weiter weist die Tellerfeder 28 umlaufende ringförmige Wellen 42 auf. Über die Dicke der Tellerfeder 28 und die genaue Ausformung und Anzahl der umlaufenden ringförmigen Wellen 42 ist die gewünschte Biegesteifigkeit der Tellerfeder 28 eingestellt. Die Biegesteifigkeit der Tellerfeder 28 bestimmt wiederum die Anpresskraft, mit welcher die Tellerfeder auf den Außenbereich 30 des Endes 16 des Fluidkanals 18 gepresst wird bzw. mit welcher der Dichtring 26 auf das Ventilglied 14 gepresst wird.

Alternativ kann die Tellerfeder 28 anstatt der umlaufenden ringförmigen Wellen 42 auch umlaufende spiralförmige Wellen aufweisen.

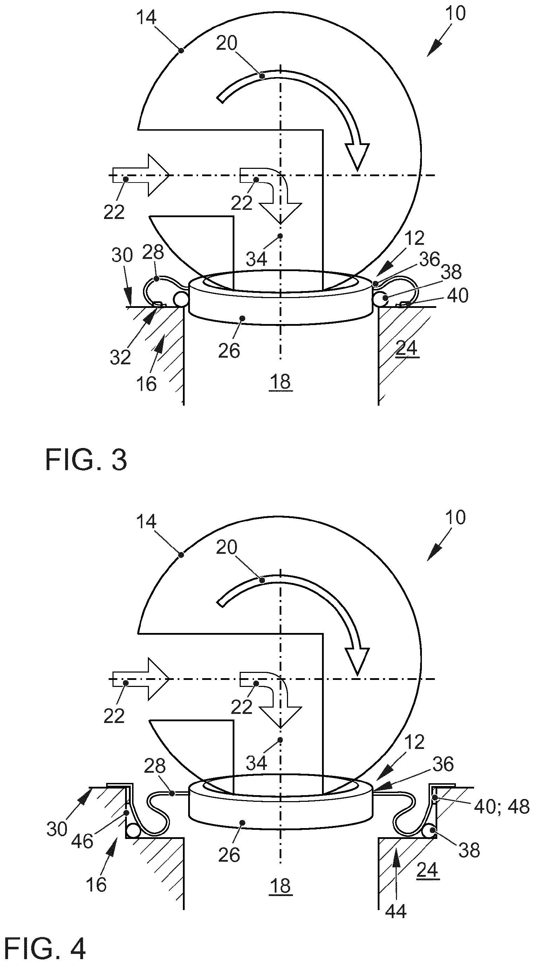

Fig. 3 zeigt eine schematische und teilweise perspektivische Ansicht einer nicht erfindungsgemäßen Ventilanordnung 10 mit einer Dichteinheit 12. Im Gegensatz zu der in der Fig. 1 dargestellten Tellerfeder 28, ist die in der Fig. 3 dargestellte Tellerfeder 28 umgebogen. Dementsprechend ist der äußere Endbereich 32 der Tellerfeder 28 auf den Dichtring 26 gerichtet.

Dadurch, dass die Tellerfeder 28 umgebogen ist, ergibt sich eine Tellerfeder 28 mit einem langen Hebelarm. Der lange Hebelarm bewirkt wiederum eine geringe Federsteifigkeit. Die geringe Federsteifigkeit sorgt nur für einen geringen Anpressdruck von dem Dichtring 26 auf das Ventilglied 14 und von der Tellerfeder 28 auf den Außenbereich 30 des Endes 16 des Fluidkanals 18.

Wie in Fig. 3 gezeigt, liegt die Tellerfeder 28 in einem gebogenen Bereich auf dem Außenbereich 30 des Endes 16 des Fluidkanals 18 auf. In diesem gebogenen Bereich befindet sich optional auch die elastische Umfassung 40.

Fig. 4 zeigt eine schematische und teilweise perspektivische Ansicht einer Ventilanordnung 10 mit einer Dichteinheit 12 gemäß einer weiteren Ausführungsform der Erfindung. Die Tellerfeder 28 ist innerhalb des Endes 16 des Fluidkanals 18 eingeklemmt. Wie in Fig. 4 zu sehen, befindet sich die Tellerfeder 28 in einem Presssitz in einer Ausnehmung 44 des Endes 16 des Fluidkanals 18. Dazu drückt die Tellerfeder 28 gegen eine Seitenwand 46 der Ausnehmung 44.

Dadurch, dass die Tellerfeder 28 gegen eine Seitenwand 46 der Ausnehmung 44 gepresst ist, korreliert die Anpressung der Tellerfeder 28 gegen das Ende 16 des Fluidkanals 18 nicht mit der Anpressung des Dichtrings 26 gegen das Ventilglied 14. Die Anpressung des Dichtrings 26 an das Ventilglied 14 kann nicht beliebig stark sein, da ansonsten das Ventilglied 14 nicht mehr problemlos gedreht werden kann. Dagegen kann die Kraft, mit der die Tellerfeder 28 auf die Seitenwand 46 der Ausnehmung 44 gepresst wird, beliebig stark sein, da sie nicht mit der Anpressung des Dichtrings 26 auf das Ventilglied 14 zusammenhängt. Auf diese Weise lässt sich eine hohe Dichtwirkung zwischen der Tellerfeder 28 und dem Ende 16 des Fluidkanals 18 erreichen.

Die elastische Umfassung 40 kann als Dichtlack 48 ausgebildet sein. Dabei ist der Dichtlack 48 auf der Seite der Tellerfeder 28 aufgebracht, welche in Richtung der Seitenwand 46 der Ausnehmung 44 weist. Der Dichtlack 48 dient dementsprechend dazu, die Tellerfeder 28 gegen die Seitenwand 46 der Ausnehmung 44 noch besser abzudichten.

### Bezugszeichenliste

- 10: Ventilanordnung
- 12: Dichteinheit
- 14: Ventilglied
- 16: Ende des Fluidkanals
- 18: Fluidkanal
- 20: Pfeil
- 22: Pfeil
- 24: Gehäuse
- 26: Dichtring
- 28: Tellerfeder
- 30: Außenbereich
- 32: äußerer Endbereich
- 34: Mittelachse
- 36: innerer Endbereich
- 38: O-Ring
- 40: elastische Umfassung
- 42: umlaufende ringförmige Welle
- 44: Ausnehmung
- 46: Seitenwand
- 48: Dichtlack

## Patentansprüche

1. Dichteinheit (12) zum Abdichten eines Übergangs zwischen einem Ventilglied (14) und einem Ende (16) eines Fluidkanals (18), aufweisend
einen Dichtring (26) zum Abdichten gegenüber dem Ventilglied (14), und
eine Tellerfeder (28) zum Abdichten gegenüber dem Ende (16) des Fluidkanals (18),
wobei der Dichtring (26) und die Tellerfeder (28) dichtend miteinander verbunden sind,
**dadurch gekennzeichnet, dass** die Dichteinheit (12) zumindest einen O-Ring (38) zum Beeinflussen der Federwirkung der Tellerfeder (28) aufweist, wobei der O-Ring (38) als Elastomerelement ausgebildet ist,
wobei die Tellerfeder (28) einen inneren Endbereich (36) aufweist, und an dem inneren Endbereich (36) stoffschlüssig, kraftschlüssig und/oder formschlüssig mit dem Dichtring (26) verbunden ist, wobei die Tellerfeder (28) einen äußeren Endbereich (32) aufweist, wobei der äußere Endbereich (32) von dem Dichtring (26) weggerichtet ist, und wobei der äußere Endbereich (32) der Tellerfeder (28) geeignet ist, an einem Außenbereich (30) des Endes (16) des Fluidkanals (18) aufzuliegen, um den äußeren Endbereich (32) gegenüber dem Außenbereich (30) abzudichten.

2. Dichteinheit nach Anspruch 1, **dadurch gekennzeichnet, dass** die Dichteinheit (12) rotationssymmetrisch um eine Mittelachse (34) ausgebildet ist.

3. Dichteinheit nach einem der vorhergehenden Ansprüche, **dadurch gekennzeichnet, dass** die Tellerfeder (28) umlaufende ringförmige Wellen (42) oder umlaufende spiralförmige Wellen aufweist.

4. Dichteinheit nach einem der vorhergehenden Ansprüche, **dadurch gekennzeichnet, dass** die Tellerfeder (28) eine elastische Umfassung (40) zum Verbessern der Dichtwirkung gegenüber dem Ende (16) des Fluidkanals (18) aufweist.

5. Ventilanordnung (10), insbesondere Regelventil zur Regelung eines Kühlmittelkreislaufs, mit einer Dichteinheit (12) nach einem der vorhergehenden Ansprüche, einem Ende (16) eines Fluidkanals (18) und einem Ventilglied (14).

6. Ventilanordnung nach Anspruch 5, **dadurch gekennzeichnet, dass** die Tellerfeder (28) an einem Außenbereich (30) des Endes (16) des Fluidkanals (18) aufliegt.

## Claims

1. Sealing unit (12) for sealing a transition between a valve member (14) and an end (16) of a fluid channel (18), comprising
a sealing ring (26) for sealing against the valve member (14), and
a spring washer (28) for sealing against the end (16) of the fluid channel (18),
wherein the sealing ring (26) and the spring washer (28) are sealingly connected to one another,
**characterized in that** the sealing unit (12) has at least one O-ring (38) for influencing the spring action of the spring washer (28), wherein the O-ring (38) takes the form of an elastomer element,
wherein said spring washer (28) has an inner end region (36) and is connected to said sealing ring (26) at said inner end region (36) in a bonded, friction-locking and/or interlocking manner, wherein said spring washer (28) has an outer end region (32), wherein said outer end region (32) is directed away from said sealing ring (26), and wherein said outer end region (32) of said spring washer (28) is adapted to abut an exterior region (30) of said end (16) of said fluid channel (18) in order to seal said outer end region (32) against said exterior region (30).

2. Sealing unit according to Claim 1, **characterized in that** the sealing unit (12) is rotationally symmetrical about a central axis (34).

3. Sealing unit according to either of the preceding claims, **characterized in that** the spring washer (28) has circumferential annular shafts (42) or circumferential spiral shafts.

4. Sealing unit according to any one of the preceding claims, **characterized in that** the spring washer (28) has an elastic surround (40) for improving the sealing effect with respect to the end (16) of the fluid channel (18).

5. Valve assembly (10), in particular a regulating valve for regulating a coolant circuit, comprising a sealing unit (12) according to any one of the preceding claims, an end (16) of a fluid channel (18), and a valve member (14).

6. Valve assembly according to Claim 5, **characterized in that** the spring washer abuts an exterior region (30) of the end (16) of the fluid channel (18).

## Revendications

1. Unité d'étanchéité (12), servant à réaliser l'étanchéité d'une transition entre un élément de soupape (14) et une extrémité (16) d'un canal de fluide (18), présentant
une bague d'étanchéité (26) servant à réaliser l'étanchéité vis-à-vis de l'élément de soupape (14) et
une rondelle à ressort (28) servant à réaliser l'étanchéité vis-à-vis de l'extrémité (16) du canal de fluide (18),
la bague d'étanchéité (26) et la rondelle à ressort (28) étant raccordées l'une à l'autre de manière étanche,
**caractérisée en ce que** l'unité d'étanchéité (12) présente au moins un joint torique (38) pour influencer l'effet de ressort de la rondelle à ressort (28), le joint torique (38) étant conçu comme un élément élastomère,
la rondelle à ressort (28) présentant une zone d'extrémité interne (36) et étant raccordée au niveau de la zone d'extrémité interne (36) par adhérence de matière, par complémentarité de force et/ou par complémentarité de forme avec la bague d'étanchéité (26), la rondelle à ressort (28) présentant une zone d'extrémité externe (32), la zone d'extrémité externe (32) étant orientée dans la direction opposée à la bague d'étanchéité (26) et la zone d'extrémité externe (32) de la rondelle à ressort (28) étant adaptée pour reposer sur une zone externe (30) de l'extrémité (16) du canal de fluide (18), afin de réaliser l'étanchéité de la zone d'extrémité externe (32) vis-à-vis de la zone externe (30).

2. Unité d'étanchéité selon la revendication 1, **caractérisée en ce que** l'unité d'étanchéité (12) est conçue symétrique en rotation autour d'un axe central (34).

3. Unité d'étanchéité selon l'une quelconque des revendications précédentes, **caractérisée en ce que** la rondelle à ressort (28) présente des ondes annulaires périphériques (42) ou des ondes en forme de spirale périphériques.

4. Unité d'étanchéité selon l'une quelconque des revendications précédentes, **caractérisée en ce que** la rondelle à ressort (28) présente une enceinte (40) élastique pour améliorer l'effet d'étanchéité vis-à-vis de l'extrémité (16) du canal de fluide (18).

5. Dispositif de soupape (10), en particulier soupape de régulation pour la régulation d'un circuit de fluide de refroidissement, comprenant une unité d'étanchéité (12) selon l'une quelconque des revendications précédentes, une extrémité (16) d'un canal de fluide (18) et un élément de soupape (14).

6. Dispositif de soupape selon la revendication 5, **caractérisé en ce que** la rondelle à ressort (28) repose sur une zone externe (30) de l'extrémité (16) du canal de fluide (18).
